# FASCICULE DE BREVET EUROPEEN

(11) **EP 2 334 557 B1**
(45) Date de publication et mention de la délivrance du brevet: **31.10.2012**
(21) Numéro de dépôt: 09747886.1
(22) Date de dépôt: 17.09.2009
(51) Int. Cl.: B64D 33/02, F02C 7/045

(54) **DISPOSITIF DE LIAISON ENTRE UNE ENTREE D'AIR ET UNE MOTORISATION D'UNE NACELLE D'AERONEF**
VORRICHTUNG ZUR VERBINDUNG EINES LUFTEINLASSES MIT DEM ANTRIEB IN EINER FLUGZEUGGONDEL
DEVICE FOR CONNECTING AN AIR INLET WITH AN AIRCRAFT PROPULSION IN A NACELLE

(30) Priorité: 23.09.2008 FR 0856387
(43) Date de publication de la demande: 22.06.2011
(73) Titulaire: Airbus Opérations SAS, 31060 Toulouse (FR)
(72) Inventeur: PORTE, Alain, F-31770 Colomiers (FR); FARGUES, Matthieu, F-82000 Montauban (FR); LALANE, Jacques, F-31650 Saint Orens De Gameville (FR)
(74) Mandataire: Fantin, Laurent
(86) Numéro de dépôt international: PCT/FR2009/051750
(87) Numéro de publication internationale: WO 2010/034922

(56) Documents cités:
- EP-A- 1 591 643

## Description

La présente invention se rapporte à un dispositif de liaison entre une entrée d'air et une motorisation d'une nacelle d'aéronef.

Un ensemble propulsif d'aéronef comprend une nacelle dans laquelle est disposée de manière sensiblement concentrique une motorisation reliée par l'intermédiaire d'un mât au reste de l'aéronef.

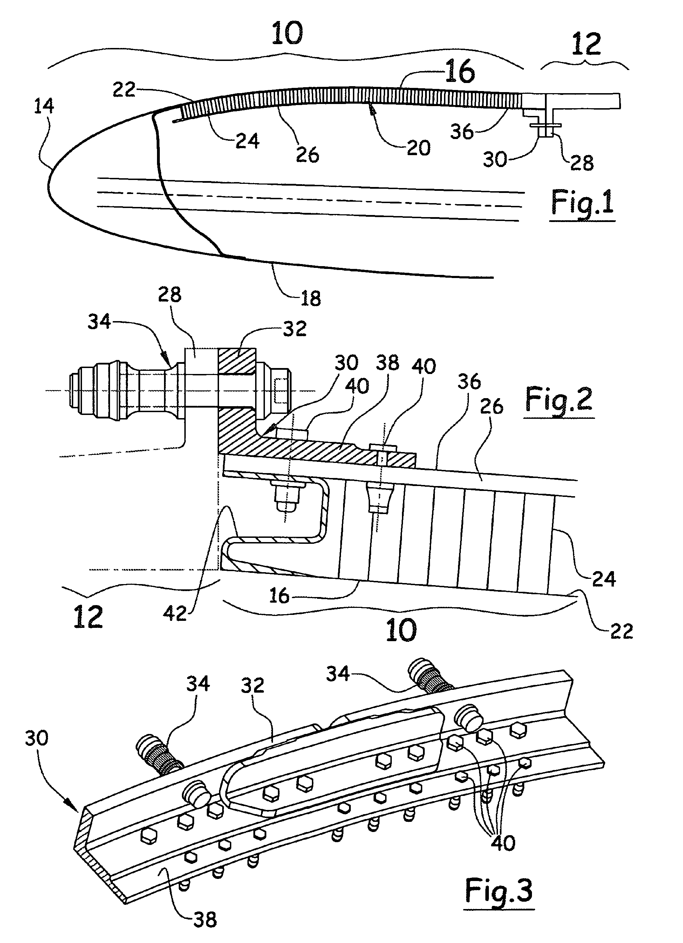

Comme illustré sur la figure 1, la nacelle comprend à l'avant une entrée d'air 10 permettant de canaliser un flux d'air dans une motorisation 12, une première partie du flux d'air entrant, appelée flux primaire, traversant la motorisation pour participer à la combustion, la seconde partie du flux d'air, appelée flux secondaire, étant entrainée par une soufflante et s'écoulant dans un conduit annulaire délimité par la paroi intérieure de la nacelle et la paroi extérieure de la motorisation.

L'entrée d'air 10 comprend une lèvre 14 dont la surface en contact avec les flux aérodynamiques est prolongée à l'intérieur de la nacelle par un conduit intérieur 16 de sections sensiblement circulaires et à l'extérieur de la nacelle par une paroi extérieure 18 de sections sensiblement circulaires.

Des techniques ont été développées pour réduire le bruit émis par un aéronef, et notamment le bruit émis par les ensembles propulsifs, A: cf. EP 1 591 643. Elles consistent à placer au niveau notamment de la paroi du conduit intérieur 16, un revêtement 20 visant à absorber une partie de l'énergie sonore, notamment en utilisant le principe des résonateurs d'Helmholtz.

De manière connue, un revêtement pour le traitement acoustique 20, également appelé panneau d'atténuation acoustique, comprend de l'extérieur vers l'intérieur une couche poreuse acoustiquement résistive 22, au moins une structure alvéolaire 24 et une couche réf lectrice ou imperméable 26.

La couche acoustiquement résistive est une structure poreuse ayant un rôle dissipatif, transformant partiellement l'énergie acoustique de l'onde sonore la traversant en chaleur. Elle comprend des zones dites ouvertes susceptibles de laisser passer les ondes acoustiques et d'autres dites fermées ou pleines ne laissant pas passer les ondes sonores mais destinées à assurer la résistance mécanique de ladite couche. Cette couche acoustiquement résistive se caractérise notamment par un taux de surface ouverte qui varie essentiellement en fonction du moteur, des composants constituant ladite couche.

L'entrée d'air 10 est reliée à la motorisation 12 par une liaison illustrée en détails sur les figures 2 et 3. Cette liaison comprend au niveau de la motorisation une collerette annulaire 28 à laquelle est solidarisée une bride 30. Cette bride a une section en L dont une aile 32 est plaquée contre la collerette 28 et solidarisée à cette dernière par tous moyens appropriés, par exemple des boulons ou des rivets 34, traversant la collerette et l'aile 32 de la bride et s'étendant parallèlement à l'axe longitudinal de la nacelle. De préférence, cette bride 30 s'étend sur la circonférence du conduit 16 et peut être réalisée en plusieurs tronçons. La bride 30 est reliée à l'entrée d'air 10 et plus particulièrement à la surface arrière 36 du panneau dit acoustique délimitant le conduit intérieur 16. A cet effet, la seconde aile 38 de la bride 30 est plaquée contre la surface arrière 36 du panneau acoustique et solidarisée à ce dernier par tous moyens appropriés, notamment des boulons ou des rivets 40 orientés radialement. Ces moyens de liaison 40 de type aveugle sont jugés moins fiables que les fixations conventionnelles. Par conséquent, le nombre de moyens de liaison 40 doit être important si bien qu'ils sont répartis selon deux rangées et il est nécessaire de prévoir une pièce structurale de renfort 42 pour assurer la liaison entre la bride 30 et le panneau acoustique délimitant le conduit 16 de l'entrée d'air.

La présence de cette pièce structurale de renfort 42 et la disposition selon deux rangées des moyens de liaison conduisent à réduire la surface traitée sur le plan acoustique et à ne pas optimiser le traitement acoustique.

Aussi, la présente invention vise à pallier les inconvénients de l'art antérieur en proposant un dispositif de liaison entre une motorisation et une entrée d'air d'une nacelle d'aéronef permettant d'optimiser le traitement acoustique.

A cet effet, l'invention a pour objet une nacelle d'aéronef comportant une entrée d'air permettant de canaliser l'air dans un conduit en direction d'un conduit d'une motorisation disposé dans le prolongement dudit conduit, ledit conduit de l'entrée d'air comportant au moins un panneau intégrant un traitement acoustique avec une couche poreuse acoustiquement résistive en contact avec le flux aérodynamique entrant dans la nacelle, au moins une structure alvéolaire et une couche réflectrice ou imperméable formant la surface arrière dudit panneau, une bride assurant la liaison entre ladite entrée d'air et ladite motorisation comportant au moins une aile reliée à ladite entrée d'air par une pluralité de moyens de liaison, caractérisée en ce que certains desdits moyens de liaison ont des axes sécants avec le chant dudit panneau délimitant le conduit de l'entrée d'air.

D'autres caractéristiques et avantages ressortiront de la description qui va suivre de l'invention, description donnée à titre d'exemple uniquement, en regard des dessins annexés sur lesquels :
- la figure 1 est une coupe schématique selon un plan radial d'une partie de l'avant d'une nacelle d'aéronef,
- la figure 2 est une coupe illustrant en détails une liaison entre un moteur et une entrée d'air d'une nacelle d'aéronef selon l'art antérieur,
- la figure 3 est une vue en perspective illustrant une partie d'une bride utilisée pour la liaison entre un moteur et une entrée d'air d'une nacelle d'aéronef selon l'art antérieur,
- la figure 4 est une coupe illustrant en détails une liaison entre un moteur et une entrée d'air d'une nacelle d'aéronef selon l'invention, et
- la figure 5 est une vue en perspective illustrant une partie d'une bride utilisée pour la liaison entre un moteur et une entrée d'air d'une nacelle d'aéronef selon l'invention.

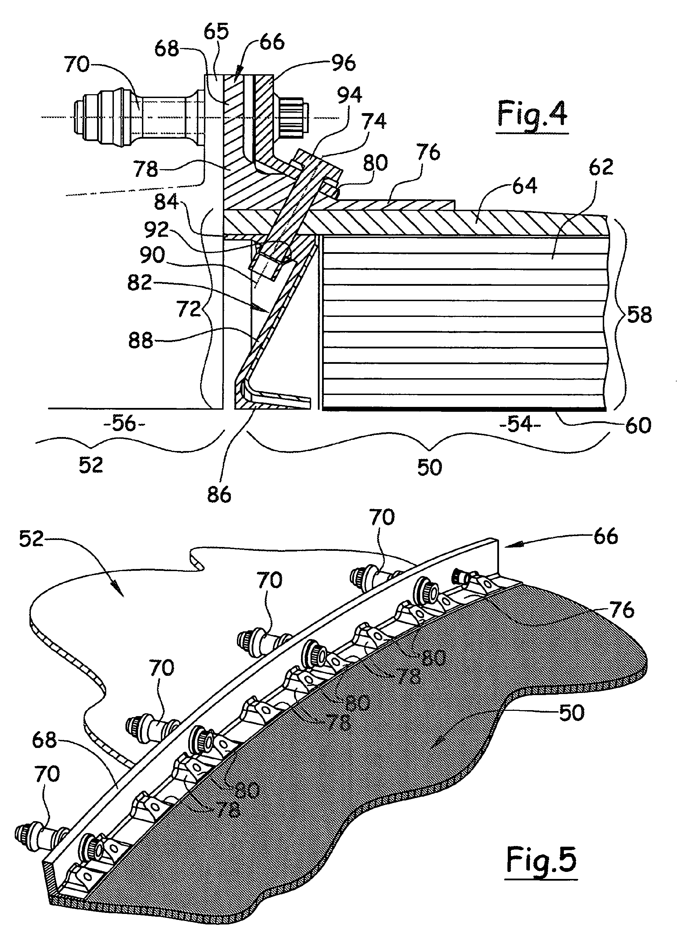

Sur la figure 4, on a représenté en coupe la zone de jonction entre une entrée d'air 50 et une motorisation 52 d'une nacelle d'aéronef. De manière connue, l'entrée d'air permet de canaliser l'air dans un conduit 54 en direction d'un conduit 56 de la motorisation disposé dans le prolongement du conduit 54.

Le conduit 54 est délimité par au moins un panneau 58 intégrant un traitement acoustique comportant une couche poreuse acoustiquement résistive 60 en contact avec le f lux aérodynamique entrant dans la nacelle, au moins une structure alvéolaire 62 et une couche réflectrice ou imperméable 64 formant la surface arrière du panneau 58.

L'entrée d'air 50 est reliée à la motorisation 52 par une liaison selon l'invention illustrée en détails sur les figures 4 et 5. Cette liaison comprend au niveau de la motorisation une collerette annulaire 65 à laquelle est solidarisée une bride 66. Cette bride a une section en L dont une première aile 68 est plaquée contre la collerette annulaire 65 et solidarisée à cette dernière par tous moyens appropriés, par exemple des boulons 70, traversant la collerette annulaire 65 et l'aile 68 de la bride et s'étendant parallèlement à l'axe longitudinal de la nacelle correspondant à l'axe de la motorisation. De préférence, cette bride 66 s'étend sur la circonférence du conduit 54 et peut être réalisée en plusieurs tronçons. La liaison entre la motorisation et la bride n'est pas plus détaillée car d'autres solutions techniques pourraient être envisagées.

L'entré d'air 50 et plus particulièrement le panneau 58 comprend un chant 72 en regard de la motorisation de manière à assurer une certaine continuité entre les conduits 54 et 56.

Selon l'invention, la bride 66 est reliée à l'entrée d'air 50 par des moyens de liaison comportant une pluralité de tiges dont les axes 74 sont sécants avec le chant 72 et ne sont donc pas radiaux. Ainsi, ces moyens de liaison ne sont pas de type aveugle, et sont donc plus fiables ce qui permet d'en réduire le nombre et de pouvoir, dans certains cas, les placer selon une seule rangée. De la sorte, le panneau 58 peut venir au plus près de la motorisation ce qui permet d'augmenter la surface traitée sur le plan acoustique et donc d'optimiser le traitement acoustique.

En complément, la bride comprend une seconde aile 76 en appui contre la surface arrière 64 du panneau 58 avec pour chaque tige, un bossage 78 avec un plan incliné 80 formant un angle de l'ordre de 30° avec ladite seconde aile 76 et perpendiculaire à l'axe 74 de chaque tige. En plus, de la rangée de tiges d'axes 74, l'aile 76 peut recevoir une ou plusieurs autres rangées de fixation de type aveugles pour compléter le transfert des efforts dans le panneau 58 si nécessaire.

Avantageusement, les bossages 78 sont prévus au niveau de la zone de jonction des ailes 68 et 76 et constituent des raidisseurs de manière à limiter les phénomènes de dépliage.

Selon un mode de réalisation, chaque bossage 78 a une section dans un plan transversal (perpendiculaire à l'axe longitudinal de la nacelle) en forme de U renversé, plaqué contre la seconde aile 76 qui s'étend depuis la première aile 68 selon la direction longitudinale en direction de l'avant de la nacelle. La partie de chaque bossage 78 orientée vers l'avant de la nacelle est inclinée par rapport à un plan transversal de manière à délimiter le plan incliné 80. Selon ce mode de réalisation, les tiges assurant la liaison entre la bride 66 et l'entrée d'air 50 peuvent être disposées au plus près de l'aile 68 de la bride ce qui permet de réduire les dimensions de la seconde aile 76 et donc d'augmenter la surface traitée sur le plan acoustique.

Pour renforcer la liaison entre la bride 66 et l'entrée d'air 50, le panneau 58 comprend au niveau du chant 72 un renfort structural 82 qui s'étend sur la circonférence du conduit 54 et qui est réalisé en au moins un tronçon.

Ce renfort structural 82 est plaqué contre la couche réflectrice 64 et placé dans le prolongement de la couche poreuse acoustiquement résistive 60 et de la structure alvéolaire 62. Ce renfort structural 82 a, selon un plan radial, une section en forme de Z, avec une première partie 84 plaquée contre la couche réf lectrice 64, une deuxième partie 86 en contact avec les flux aérodynamiques assurant le prolongement entre les conduits 54 et 56 et une troisième partie dite intermédiaire 88 reliant les parties 84 et 86 délimitant un dégagement 90 permettant de loger une partie des moyens de liaison entre la bride 66 et l'entrée d'air 50. La zone de jonction entre les parties 84 et 88 comprend une surépaisseur avec un plan incliné 92 parallèle aux plans inclinés 80 et perpendiculaire aux axes 74.

Selon un mode de réalisation illustré sur la figure 4, les moyens de liaison entre la bride 66 et l'entrée d'air 50 comprennent des boulons 94 comportant une tige d'axe 74 avec à une première extrémité une butée, par exemple une tête en appui contre le plan incliné 80 et à une seconde extrémité une butée par exemple un écrou en appui contre le plan incliné 92, les deux butées étant accessibles. Lorsque la bride 66 est réalisée en plusieurs tronçons mis bout à bout, des moyens sont prévus pour assurer la liaison et la reprise des efforts entre deux tronçons successifs. Dans ce cas, une cornière de renfort 96 est disposée à cheval sur les deux tronçons à relier, ladite cornière de renfort étant reliée aux tronçons grâce d'une part aux moyens de liaison 94 entre la bride 66 et l'entrée d'air 50, et d'autre part aux moyens de liaison 70 entre la bride 66 et la motorisation 52.

## Revendications

1. Nacelle d'aéronef comportant une entrée d'air (50) permettant de canaliser l'air dans un conduit (54) en direction d'un conduit (56) d'une motorisation (52) pouvant être disposé dans le prolongement dudit conduit (54), ledit conduit (54) de l'entrée d'air comportant au moins un panneau (58) intégrant un traitement acoustique avec une couche poreuse acoustiquement résistive (60) en contact avec le f lux aérodynamique entrant dans la nacelle, au moins une structure alvéolaire (62) et une couche réflectrice ou imperméable (64) formant la surface arrière dudit panneau (58), une bride (66) assurant la liaison entre ladite entrée d'air (50) et ladite motorisation (52) comportant au moins une aile (76) reliée à ladite entrée d'air (50) par une pluralité de moyens de liaison, **caractérisée en ce que** certains desdits moyens de liaison ont des axes (74) sécants avec le chant (72) dudit panneau (58) délimitant le conduit (54) de l'entrée d'air.

2. Nacelle d'aéronef selon la revendication 1, **caractérisée en ce que** la bride (66) comprend au niveau de ladite aile (76) en appui contre la surface arrière (64) du panneau (58), pour chaque moyen de liaison, un bossage (78) avec un plan incliné (80) formant un angle avec ladite seconde aile (76) et perpendiculaire à l'axe (74) des moyens de liaison.

3. Nacelle d'aéronef selon la revendication 1 ou 2, **caractérisée en ce que** la bride (66) comprend au niveau de ladite aile (76) des moyens de liaison de type aveugle.

4. Nacelle d'aéronef selon la revendication 2 ou 3, **caractérisée en ce que** chaque bossage (78) a une section dans un plan transversal en forme de U renversé, plaqué contre la seconde aile (76) qui s'étend depuis la première aile (68) selon la direction longitudinale en direction de l'avant de la nacelle, la partie de chaque bossage (78) orientée vers l'avant de la nacelle étant inclinée par rapport à un plan transversal de manière à délimiter le plan incliné (80).

5. Nacelle d'aéronef selon l'une quelconque des revendications précédentes, **caractérisée en ce que** le panneau (58) comprend au niveau du chant (72) un renfort structural (82).

6. Nacelle d'aéronef selon la revendication 5, **caractérisée en ce que** le renfort structural (82) est plaqué contre la couche réflectrice (64) et placé dans le prolongement de la couche poreuse acoustiquement résistive (60) et de la structure alvéolaire (62) et **en ce que** ledit renfort structural (82) a, selon un plan radial, une section en forme de Z, avec une première partie (84) plaquée contre la couche réflectrice (64), une deuxième partie (86) assurant le prolongement entre les conduits (54, 56) de l'entrée d'air et de la motorisation et une troisième partie dite intermédiaire (88) reliant lesdites première et seconde parties (84, 86) délimitant un dégagement (90) permettant de loger une partie des moyens de liaison entre la bride (66) et l'entrée d'air (50).

7. Nacelle d'aéronef selon la revendication 6, **caractérisée en ce que** la zone de jonction entre la partie (84) en contact avec la couche réflectrice (64) et la partie intermédiaire (88) du renfort structural (82) comprend une surépaisseur avec un plan incliné (92) perpendiculaire aux axes (74) des moyens de liaison.

8. Nacelle d'aéronef selon l'une quelconque des revendications précédentes, **caractérisée en ce que** les moyens de liaison entre la bride (66) et l'entrée d'air (50) comprennent chacun une tige d'axe (74) avec à une première extrémité une butée en appui contre un plan incliné (80) et à une seconde extrémité une butée en appui contre un plan incliné (92).

## Claims

1. Aircraft nacelle that comprises an air intake (50) that makes it possible to channel the air in a pipe (54) in the direction of a pipe (56) of a power plant (52) that may be arranged in the extension of said pipe (54), whereby said pipe (54) of the air intake comprises at least one panel (58) that integrates an acoustic treatment with an acoustically resistive porous layer (60) that is in contact with the aerodynamic stream that enters into the nacelle, at least one alveolar structure (62), and a reflective or impermeable layer (64) that forms the rear surface of said panel (58), a flange (66) that ensures the connection between said air intake (50) and said power plant (52) comprising at least one wing (76) that is connected to said air intake (50) by a number of connecting means, **characterized in that** some of said connecting means have axes (74) that are secant with the edge (72) of said panel (58) that delimits the pipe (54) of the air intake.

2. Aircraft nacelle according to Claim 1, wherein the flange (66) comprises at said wing (76), resting against the rear surface (64) of the panel (58), for each connecting means, a projection (78) with an inclined plane (80) that forms an angle with said second wing (76) and is perpendicular to the axis (74) of the connecting means.

3. Aircraft nacelle according to Claim 1 or 2, wherein the flange (66) comprises, at said wing (76), blind-type connecting means.

4. Aircraft nacelle according to Claim 2 or 3, wherein each projection (78) has a cross-section in a transverse plane in the shape of an inverted U, flattened against the second wing (76) that extends from the first wing (68) in the longitudinal direction in the direction toward the front of the nacelle, with the portion of each projection (78) that is oriented toward the front of the nacelle being inclined relative to a transverse plane in such a way as to delimit the inclined plane (80).

5. Aircraft nacelle according to any of the preceding claims, wherein the panel (58) comprises a structural reinforcement (82) at the edge (72).

6. Aircraft nacelle according to Claim 5, wherein the structural reinforcement (82) is flattened against the reflective layer (64) and placed in the extension of the acoustically resistive porous layer (60) and the alveolar structure (62) and wherein said structural reinforcement (82) has, along a radial plane, a Z-shaped cross-section with a first part (84) that is flattened against the reflective layer (64), a second part (86) that ensures the extension between the pipes (54, 56) of the air intake and the power plant, and a third so-called intermediate part (88) that connects said first and second parts (84, 86) delimiting a release (90) that makes it possible to house a portion of the connecting means between the flange (66) and the air intake (50).

7. Aircraft nacelle according to Claim 6, wherein the junction zone between the part (84) that is in contact with the reflective layer (64) and the intermediate part (88) of the structural reinforcement (82) comprises a raised surface with an inclined plane (92) that is perpendicular to the axes (74) of the connecting means.

8. Aircraft nacelle according to any of the preceding claims, wherein the connecting means between the flange (66) and the air intake (50) each comprise a rod of axis (74) with - at a first end - a stop resting against an inclined plane (80) and - at a second end - a stop resting against an inclined plane (92).

## Patentansprüche

1. Flugzeuggondel mit einem Lufteinlass (50), der es gestattet, Luft in eine Führung (54) in Richtung einer Führung (56) eines Antriebs (52) zu kanalisieren, der in der Verlängerung der Führung (54) angeordnet sein kann, wobei die Führung (54) des Lufteinlasses wenigstens eine Platte (58) aufweist, die eine Schallbehandlung einschließt, mit einer porösen schalldämpfenden Schicht (60) in Kontakt mit dem aerodynamischen Fluss, der in die Gondel eintritt, mit wenigstens einer Kammerstruktur (62) und einer reflektierenden oder undurchlässigen Schicht (64), die die hintere Oberfläche der Platte (58) bildet, wobei eine Lasche (66) die Verbindung zwischen dem Lufteinlass (50) und dem Antrieb (52) gewährleistet und wenigstens einen Schenkel (76) aufweist, der mit dem Lufteinlass (50) über eine Vielzahl von Verbindungsmitteln verbunden ist, **dadurch gekennzeichnet, dass** einige der Verbindungsmittel Achsen (74) aufweisen, die sich mit der Stirnseite (72) der Platte (58) schneiden, die die Führung (54) des Lufteinlasses begrenzt.

2. Flugzeuggondel nach Anspruch 1, **dadurch gekennzeichnet, dass** die Lasche (66) im Bereich des an der hinteren Oberfläche (64) der Platte (58) anliegenden Schenkels (76) für jedes Verbindungsmittel einen Buckel (78) mit einer geneigten Ebene (80) aufweist, die mit dem zweiten Schenkel (76) einen Winkel bildet und im rechten Winkel zur Achse (74) der Verbindungsmittel ausgerichtet ist.

3. Flugzeuggondel nach Anspruch 1 oder 2, **dadurch gekennzeichnet, dass** die Lasche (66) im Bereich des Schenkels (76) Verbindungsmittel vom verblendeten Typ aufweist.

4. Flugzeuggondel nach Anspruch 2 oder 3, **dadurch gekennzeichnet, dass** jeder Buckel (78) in einer quer verlaufenden Ebene einen Querschnitt eines umgedrehten U aufweist, das den zweiten Schenkel (76) stützt, der sich vom ersten Schenkel (68) in Längsrichtung bezüglich der Gondel nach vorne erstreckt, wobei der dem vorderen Bereich der Gondel zugewandte Teil jedes Buckels (78) bezüglich einer quer verlaufenden Ebene geneigt ist und auf diese Weise die geneigte Ebene (80) begrenzt.

5. Flugzeuggondel nach einem der vorhergehenden Ansprüche, **dadurch gekennzeichnet, dass** die Platte (58) im Bereich der Stirnseite (72) eine strukturelle Verstärkung (82) aufweist.

6. Flugzeuggondel nach Anspruch 5, **dadurch gekennzeichnet, dass** die strukturelle Verstärkung (82) die reflektierende Schicht (64) stützt und in der Verlängerung der porösen schalldämpfenden Schicht (60) und der Kammerstruktur (62) angeordnet ist und dass die strukturelle Verstärkung (82) in einer radialen Ebene einen Z-förmigen Abschnitt aufweist mit einem ersten Abschnitt (84), der sich gegen die reflektierende Schicht (64) stützt, einem zweiten Abschnitt (86), der die Verlängerung zwischen den Führungen (54, 56) des Lufteinlasses und des Antriebs gewährleistet, und einen sogenannten mittleren dritten Abschnitt (88), der die ersten und zweiten Abschnitte (84, 86) verbindet, und einen Einzug (90) begrenzt, der es gestattet, einen Abschnitt der Verbindungsmittel zwischen der Lasche (66) und des Lufteinlasses (50) anzuordnen.

7. Flugzeuggondel nach Anspruch 6, **dadurch gekennzeichnet, dass** der Verbindungsbereich zwischen dem Abschnitt (84) in Kontakt mit der reflektierenden Schicht (64) und dem mittleren Abschnitt (88) der strukturellen Verstärkung (82) einen Übergang mit einer geneigten Ebene (92) aufweist, die im rechten Winkel zu den Achsen (74) der Verbindungsmittel ausgerichtet ist.

8. Flugzeuggondel nach einem der vorhergehenden Ansprüche, **dadurch gekennzeichnet, dass** die Verbindungsmittel zwischen der Lasche (66) und dem Lufteinlass (50) jeweils eine axiale Stange (74) aufweist, die an einem ersten Ende einen an der geneigten Ebene (80) angeordneten Anschlag aufweist und am zweiten Ende einen an einer Ebene (92) anliegenden Anschlag aufweist.
